# EUROPEAN PATENT SPECIFICATION

(11) **EP 1 927 802 B1**
(45) Date of publication and mention of the grant of the patent: **05.01.2011**
(21) Application number: 07022927.3
(22) Date of filing: 27.11.2007
(51) Int. Cl.: F16K 24/04

(54) **Float-type air venting valve**
Schwimmerartiges Entlüftungsventil
Clapet d'aération de type à flotteur

(30) Priority: 30.11.2006 IT MI20060420
(43) Date of publication of application: 04.06.2008
(73) Proprietor: CALEFFI S.p.A., Fontaneto d'Agogna, (NO) (IT)
(72) Inventor: Caleffi, Marco, 28021 Borgomanero Novara (IT)
(74) Representative: Coloberti, Luigi

(56) References cited:
- EP-A- 0 961 061
- EP-A- 1 473 495
- EP-B- 1 227 282
- EP-B- 1 573 241

## Description

### BACKGROUND OF THE INVENTION

This invention concerns a float-type air venting valve for heating systems, which is suitable for being fitted directly onto pump bodies or onto other apparatuses of a heating system, without the need to provide any auxiliary support or protection element for the float.

### STATE OF THE ART

Air venting valves of the aforementioned kind are generally known, for example by the utility model application IT MI95U000564 and the patent application EP-A-1473495.

In particular, the utility model application IT MI95U000564 describes a float-type air venting valve comprising a cup-shaped cover that can be screwingly connected to a pipe fitting of a pump body or other apparatuses; the cup-shaped cover is provided with a valve body having an airtight seat which is normally closed by a plug supported by a helical spring.

The plug has a shank which extends inside the cover to engage with a float sliding between a raised position in which it closes the valve and a lowered position in which it opens the valve.

The valve also comprises support and protection means for supporting the float in the lowered position, which consist of a basket having legs which extend from the cover along the float, ending with a cross part which connects the legs each other in order to support and protect the same float during storage, transport and installation for use.

A valve solution of this kind however involves an additional cost due to the presence of the float supporting basket, as well as additional operations for assembling the basket inside the cover.

EP-A-1473495 also concerns a float-type air venting valve of the aforementioned kind, which comprises a bell through which extends a valve body ending with a valve seat closed by a plug movably supported by a helical spring; the valve also comprises a float provided on the upper part with a first bridge-shaped element, which is engaged with the valve body to support the float, and with a second bridge-shaped element operatively connected to the plug.

The first bridge-shaped support element slides between opposite guiding surfaces provided within the bell, but such guiding surfaces are exposed to splashes of dirt water during air discharge, which can cause sliding problems to the same bridge-shaped element of the float.

In fact, dirt and sediments, present in the heating system and in particular in correspondence to the water surface, owing to the configuration of the float, can reach the guiding surfaces, causing the above sliding problems, as well as can come into contact with the valve seat, thereby reducing the efficiency and reliability of the valve.

Further sliding problems for the first bridge-shaped element with respect to the guiding surfaces can arise also owing to possible misalignments of the float, which can obstruct a free movement of the same float.

Such a solution additionally has constructional drawbacks, since a suitable seating with the above guiding surfaces has to be provided in the bell for said first bridge-shaped element, this entailing a greater construction complexity.

EP-A-0 961 061, EP-B-1 573 241, and EP-B-1 227 282 describe air bleeding valves comprising an outer cylindrically shaped body, a cup-shaped cover for the cylindrical body, a valve body in the cup-shaped cover having a seat, a closing member for the valve seat, the closing member having a shank, and a float movably arranged inside the outer body, the float being operatively connected to the shank of the closing member.

### OBJECTS OF THE INVENTION

The object of this invention is to provide an air venting valve for heating systems of the aforementioned kind, which is particularly efficient and reliable over time, and which at the same time is inexpensive and easily assemblable.

### BRIEF DESCRIPTION OF THE INVENTION

The above can be achieved by a float-type air venting valve, according to claim 1.

### BRIEF DESCRIPTION OF THE DRAWINGS

These and further characteristics according to this invention, will be more clearly evident from the following description with reference to the accompanying drawings, in which:
- Fig. 1 shows a longitudinal cross-section of the air venting valve according to a first embodiment of this invention, with the closing member in a lowered open position for the valve;
- Fig. 2 shows an underside perspective view of the cup-shaped element of the valve, in which a first embodiment of the stop means for the closing member can be seen; and
- Fig. 3 shows a partial underside perspective view of the cup-shaped element of the valve, which illustrates a second embodiment for the stop means for the closing member.

### DETAILED DESCRIPTION OF THE INVENTION

The general characteristics of this invention will be illustrated hereunder by means of exemplificative embodiments.

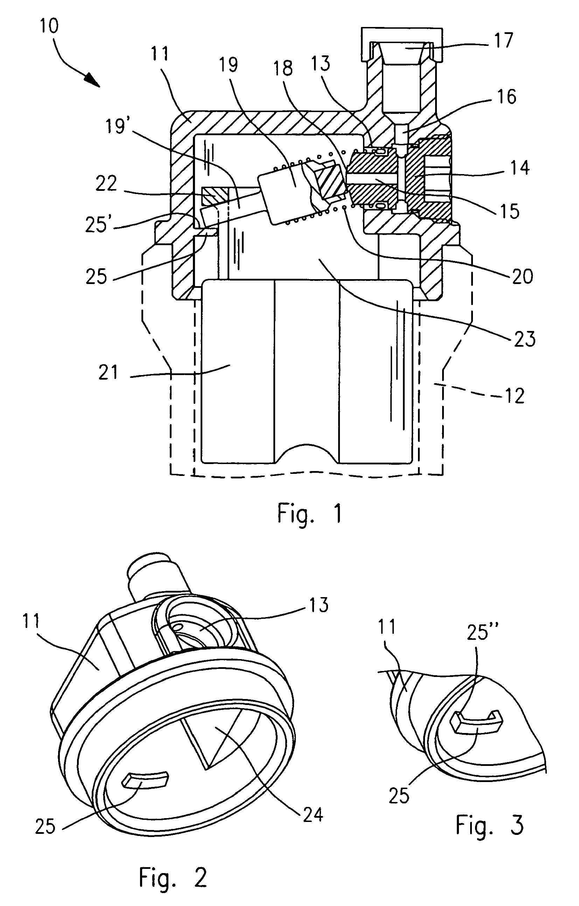

Figures 1 and 2, illustrate an air venting valve according to a first embodiment of this invention, which is particularly suitable for being fitted directly onto pump bodies or onto other apparatuses of a heating system, without the need to provide any additional or separate support element for the float.

The valve, indicated as a whole by the reference number 10, comprises a cup-shaped element 11, generally in the form of a cover that can be tightly fitted onto a pipe fitting 12, indicated by the broken lines in Fig. 1, of any apparatus of a heating system, for example the body of a circulation pump for a thermal fluid, having an appropriate housing provided for the air venting valve. The cup-shaped element 11 on one side has a through hole 13 which defines a housing for a valve body 14 having an air venting duct 15 extending towards a discharge opening 16 which can be closed or adjusted by a suitable cap 17.

Inside the cup-shaped element 11, the air venting duct 15 provided in the valve body 14 ends with a valve seat 18 designed to be closed by a frontal plug or closing member 19, which is supported by the same valve seat 18 by means of a helical spring 20 which is screwed or forced onto the peripheral surfaces of the same closing member 19 and of a protruding portion of the valve body 14 which extends towards the inside of the cup-shaped element 11.

The closing member 19, supported in such a way, can move between a raised position, aligned with the air venting duct 15 in which it closes the valve 10, and a lowered or slanted position in which it opens the valve 10.

The closing member 19, on the opposite side with respect to the valve seat 18, has a shank 19' which extends inside the cup-shaped element 11 to engage with connecting means of an axially sliding control float 21 for controlling the same closing member 19.

Preferentially, the connecting means for connecting the float 21 to the shank 19' comprise a crosspiece 22 extending between a first and a second side walls 23 which protrude from the upper side of the same float 21, the said side walls 23 being disposed to slide in a guided way between corresponding internal guide walls 24 of the cup-shaped element 11.

The shank 19' of the closing member 19 is arranged to engage itself beneath the crosspiece 22 of the connecting means for the float 21, thus defining a suspending connection of the same float 21 to the shank 19'.

The whole valve 10, comprising the cup-shaped element 11, the valve body 14, the closing member 19 and the float 21 assembled together, must be able to be stored and transported before its use, and must be able to be installed and used without running the risk of the float 21 becoming disengaged from the shank 19' of the closing member 19.

There is consequently a need to provide an adequate support for the float 21 itself, so as to prevent it from becoming accidentally detached from the closing member 19.

For such purpose, according to this invention, the cup-shaped element 11 comprises stop means 25 shaped and disposed for retaining the shank 19' of the closing member 19 in the lowered open position, in such a way that the float 21 is held and supported by the same shank 19' when the latter is resting against the stop means 25, in correspondence with the aforesaid lowered position.

Preferentially, the stop means for retaining the shank 19' of the closing member 19 comprise a stop projection 25 which extends inside the cup-shaped element 11, defining a supporting surface 25' for supporting the same shank 19' in the lowered open position.

The stop projection 25 in particular is disposed in the cup-shaped element 11 on a side opposite to the housing 13 for the valve body 14, and extends according to a circumferential arc towards the inside of the same cup-shaped element 11.

Fig. 3 illustrates a second embodiment of the stop means for the valve of the invention, in which the stop projection 25 is provided at its side ends with side retaining edges 25" for retaining the shank 19' of the closing member 19 in the lowered open position, in such a way as to prevent it from moving laterally and slipping out from the stop projection 25.

From the foregoing, it is evident that the air venting valve for heating systems according to this invention is more economical and easy to assemble compared to the conventional solutions, since it has no additional separate parts for supporting the float; at the same time, the valve is particularly efficient and reliable over time, since neither sliding problems, nor sealing problems at the valve seat arise due to dirt, thanks to the configuration of the float and the relevant connecting and support means.

## Claims

1. Float-type air venting valve (10), comprising:
- a cup-shaped element (11) having a through housing (13) for a valve body (14);
- a valve body (14) disposed in said through housing (13), the valve body (14) being provided with a valve seat (18);
- a frontal closing member (19) for the valve seat (18), the closing member (19) being supported by said valve seat (18) by means of a helical spring (20) to move between a raised position in which it closes the valve and a lowered position in which it opens the valve, said closing member (19) having a shank (19') which extends inside the cup-shaped element (11); and
- an axially sliding float (21) for controlling the closing member (19), the float (21) comprising on the upper part engageable connecting means (22) for connection to the shank (19') of the same closing member (19),
in which said cup-shaped element (11) comprises stop means (25) shaped and disposed for stopping the shank (19') of the closing member (19) in the lowered open position, said float (21) being held and supported by the closing member shank (19') resting against said stop means (25), in correspondence with said lowered position of the same closing member (19),
**characterised in that** said stop means (25) for stopping the shank (19') of the closing member (19) comprise a stop projection (25) which extends inside said cup-shaped element (11), the stop projection (25) having a supporting surface (25') for supporting said shank (19') of the closing member (19) in said lowered open position.

2. Float-type air venting valve (10) according to claim 1, **characterised in that** said stop projection (25) is disposed in said cup-shaped element (11) on a side opposite to said housing (13) for the valve body (14).

3. Float-type air venting valve (10) according to claim 1, **characterised in that** said stop projection (25) extends in said cup-shaped element (11) according to a circumferential arc.

4. Float-type air venting valve (10) according to claim 3, **characterised in that** said stop projection (25) is provided at its side ends with side retaining edges (25") for retaining the shank (19') of the closing member (19) in said lowered open position.

5. Float-type air venting valve (10) according to any of the previous claims, **characterised in that** said connecting means (22) for connecting the float (21) comprise a crosspiece (22) arranged to engage with said shank (19') of the closing member (19), said engageable crosspiece (22) being connected to a first and a second side walls (23) extending above the same float (21), the first and the second side walls (23) being shaped in such a way as to slide between corresponding internal guide walls (24) of the cup-shaped element (11).

## Patentansprüche

1. Schwimmerbelüftungsventil (10), bestehend aus:
- einem becherförmigen Element (11), das eine Einhausung (13) für einen Ventilkörper (14) hat;
- einem in die besagte Einhausung (13) angeordneten Ventilkörper (14), wobei der Ventilkörper (14) mit einen Ventilsitz (18) versehen ist;
- einem frontalen Verschlussteil (19) für den Ventilsitz (18), wobei das Verschlussteil (19) durch den Ventilsitz (18) mit einer Schraubenfeder (20) unterstützt wird um zwischen einer angehobenen Position, in der das Ventil geschlossen wird, und einer abgesenkten Position, in der das Ventil geöffnet wird, zu wechseln, wobei das besagte Verschlussteil (19) einen Schaft (19') hat, der sich in das becherförmige Element (11) erweitert; und
- einem achsparallelen, verschiebbaren Schwimmkörper (21), der das Verschlussteil (19) steuert, wobei der Schwimmkörper (21) aus einer im oberen Teil zuschaltbaren Verbindungsvorrichtung (22) für die Verbindung mit dem Schaft (19') des gleichen Verschlussteil (19) besteht, indem das besagte becherförmige Element (11) aus Halteelementen (25) besteht, die so geformt und angeordnet sind, dass sie den Schaft (19') des Verschlussteil (19) in der abgesenkten Position stoppen, wobei der besagte Schwimmkörper (21) durch den Schaft (19'), der an den besagten Halteelementen (25) angelehnt ist, mit Übereinstimmung der besagten abgesenkten Position des gleichen Verschlussteils (19) gehalten und unterstützt wird, **gekennzeichnet dadurch, dass** die besagten Halteelemente (25) für den Schaft (19') des Verschlussteils (19) aus einer Anschlagnase (25), die sich in den besagten becherförmigen Element (11) erweitert, wobei die Anschlagnase (25) eine Auflagefläche (25') zur Unterstützung des besagten Schaft (19') des Verschlussteil (19) in der besagten abgesenkten, offenen Position hat, besteht.

2. Schwimmerbelüftungsventil (10) gemäß Anspruch 1, **gekennzeichnet dadurch, dass** die besagten Halteelemente (25) an den besagten becherförmigen Element (11) an einer Fläche gegenüber der besagten Einhausung (13) für den Ventilkörper (14) angeordnet werden.

3. Schwimmerbelüftungsventil (10) gemäß Anspruch 1, **gekennzeichnet dadurch, dass** das besagte Halteelement (25) sich in den besagten becherförmigen Element (11) kreisbogenförmig erweitert.

4. Schwimmerbelüftungsventil (10) gemäß Anspruch 3, **gekennzeichnet dadurch, dass** das besagte Halteelement (25) an den Seitenenden mit Halteecken (25") versehen ist um den Schaft (19') des Verschlussteils (19) in besagter abgesenkter Position zu halten.

5. Schwimmerbelüftungsventil (10) gemäß irgendeinen der vorangegangenen Ansprüche, **gekennzeichnet dadurch, dass** die besagte Verbindungsvorrichtung (22), um den Schwimmkörper (21) zu verbinden, ein Kreuzstück (22) umfasst, das so angeordnet, dass es den Schaft (19') des Verschlussteils (19) einlegt, wobei das besagte eingelegte Kreuzstück (22) mit ersten und zweiten Seitenwänden (23) verbunden ist, die sich über den selben Schwimmkörper (21) erweitern, wobei die ersten und zweiten Seitenwände (23) so geformt sind, dass sie zwischen den inneren Leitwänden (24) des becherförmigen Elements (11) rutschen können.

## Revendications

1. Valve de purge d'air du type à flotteur (10), comprenant :
- un élément en forme de coupelle (11) ayant un logement traversant (13) pour un corps de valve (14) ;
- un corps de valve (14) disposé dans ledit logement traversant (13), le corps de valve (14) étant doté d'un siège de valve (18) ;
- un élément de fermeture frontale (19) pour le siège de valve (18), l'élément de fermeture (19) étant supporté par ledit siège de valve (18) au moyen d'un ressort hélicoïdal (20) pour se déplacer entre une position relevée dans laquelle il ferme la valve et une position abaissée dans laquelle il ouvre la valve, ledit élément de fermeture (19) comportant une tige (19') s'étendant à l'intérieur de l'élément en forme de coupelle (11) ; et
- un flotteur coulissant axialement (21) pour commander l'élément de fermeture (19), le flotteur (21) comprenant sur la partie supérieure des moyens de raccordement pouvant être accouplés (22) pour le raccordement à la tige (19') du même élément de fermeture (19),
dans lequel ledit élément en forme de coupelle (11) comprend des moyens de butée (25) formés et disposés pour arrêter la tige (19') de l'élément de fermeture (19) dans la position ouverte abaissée, ledit flotteur (21) étant maintenu et supporté par la tige (19') de l'élément de fermeture reposant contre lesdits moyens de butée (25), de façon correspondante à ladite position abaissée du même élément de fermeture (19), **caractérisé en ce que** lesdits moyens de butée (25) pour arrêter la tige (19') de l'élément de fermeture (19) comprennent une protubérance de butée (25) s'étendant à l'intérieur dudit élément en forme de coupelle (11), la protubérance de butée (25) comprenant une surface de support (25') pour supporter ladite tige (19') de l'élément de fermeture (19) dans ladite position ouverte abaissée.

2. Valve de purge d'air du type à flotteur (10) selon la revendication 1, **caractérisée en ce que** ladite protubérance de butée (25) est disposée dans ledit élément en forme de coupelle (11) sur un côté opposé audit logement (13) pour le corps de valve (14).

3. Valve de purge d'air du type à flotteur (10) selon la revendication 1, **caractérisée en ce que** ladite protubérance de butée (25) s'étend dans ledit élément en forme de coupelle (11) selon un arc circonférentiel.

4. Valve de purge d'air du type à flotteur (10) selon la revendication 3, **caractérisée en ce que** ladite protubérance de butée (25) est dotée à ses extrémités latérales de bords de retenue latéraux (25") pour retenir la tige (19') de l'élément de fermeture (19) dans ladite position ouverte abaissée.

5. Valve de purge d'air du type à flotteur (10) selon l'une quelconque des revendications précédentes, **caractérisée en ce que** lesdits moyens de raccordement (22) pour raccorder le flotteur (21) comprennent une traverse (22) agencée pour s'accoupler avec ladite tige (19') de l'élément de fermeture (19), ladite traverse (22) pouvant être accouplée étant raccordée à un premier et à un second flanc (23) s'étendant au-dessus du même flotteur (21), le premier et le second flanc (23) étant formés de telle manière qu'ils coulissent entre des parois de guidage (24) intérieures correspondantes de l'élément en forme de coupelle (11).
